# EUROPÄISCHE PATENTSCHRIFT

(11) **EP 2 872 351 B1**
(45) Veröffentlichungstag und Bekanntmachung des Hinweises auf die Patenterteilung: **07.03.2018**
(21) Anmeldenummer: 13736848.6
(22) Anmeldetag: 04.07.2013
(51) Int. Cl.: B60K 35/00, B60W 30/17, B60W 30/12, B60W 50/14

(54) **VERFAHREN ZUM BETREIBEN EINES FAHRERASSISTENZSYSTEMS FÜR EIN FAHRZEUG UND FAHRERASSISTENZSYSTEM FÜR EIN FAHRZEUG**
METHOD FOR OPERATING A DRIVER ASSISTANCE SYSTEM FOR A VEHICLE AND A DRIVER ASSISTANCE SYSTEM FOR A VEHICLE
PROCÉDÉ POUR FAIRE FONCTIONNER UN SYSTÈME D'ASSISTANCE À LA CONDUITE POUR UN VÉHICULE ET SYSTÈME D'ASSISTANCE À LA CONDUITE POUR UN VÉHICULE

(30) Priorität: 11.07.2012 DE 102012212065
(43) Veröffentlichungstag der Anmeldung: 20.05.2015
(73) Patentinhaber: Robert Bosch GmbH, 70442 Stuttgart (DE)
(72) Erfinder: FUEHRER, Thomas, 70499 Stuttgart-Weilimdorf (DE)
(86) Internationale Anmeldenummer: PCT/EP2013/064096
(87) Internationale Veröffentlichungsnummer: WO 2014/009235

(56) Entgegenhaltungen:
- DE-A1-102005 022 676
- DE-A1-102009 048 954
- DE-A1-102010 022 433
- US-A1- 2011 238 290
- Wikipedia: "Standortbezogene Dienste", , 26. Juni 2012 (2012-06-26), XP002713781, Gefunden im Internet: URL:http://de.wikipedia.org/w/index.php?ti tle=Standortbezogene_Dienste&oldid=1048391 64 [gefunden am 2013-09-27]

## Beschreibung

Die Erfindung betrifft ein Verfahren zum Betreiben eines Fahrerassistenzsystems für ein Fahrzeug. Die Erfindung betrifft ferner ein Fahrerassistenzsystem für ein Fahrzeug. Die Erfindung betrifft des Weiteren ein Computerprogramm.

### Stand der Technik

Fahrerassistenzsysteme für Fahrzeuge als solche sind bekannt. Üblicherweise stellen diese einem Fahrer des Fahrzeugs Informationen über ein Umfeld des Fahrzeugs bereit.

Es ist wünschenswert, dass das Bereitstellen der Information einen Fahrer sinnvoll bei einer Fahrzeugführung unterstützt, so dass dieser das Fahrzeug sicher und effizient durch einen Verkehr führen kann.

Die Offenlegungsschrift DE 10 2009 048 954 A1 zeigt ein Verfahren und eine Vorrichtung zum automatischen Betreiben eines Fahrzeugs in einem keine Nutzeraktion erfordernden autonomen Fahrbetrieb.

### Offenbarung der Erfindung

Die der Erfindung zugrunde liegende Aufgabe kann darin gesehen werden, ein Verfahren zum Betreiben eines Fahrerassistenzsystems für ein Fahrzeug bereitzustellen, welches eine effiziente und sichere Fahrzeugführung ermöglicht.

Die der Erfindung zugrunde liegende Aufgabe kann auch darin gesehen werden, ein entsprechendes Fahrerassistenzsystem für ein Fahrzeug bereitzustellen.

Die der Erfindung zugrunde liegende Aufgabe kann auch darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Fahrerassistenzsystems für ein Fahrzeug bereitgestellt. Das Fahrerassistenzsystem umfasst einen Stauassistenten zum Führen des Fahrzeugs während eines Staus. Es ist vorgesehen, dass ein Betriebszustand des Stauassistenten erfasst und abhängig von dem erfassten Betriebszustand eine mit einem Umfeld des Fahrzeugs verknüpfte Information bereitgestellt wird.

Gemäß einem weiteren Aspekt wird ein Fahrerassistenzsystem für ein Fahrzeug bereitgestellt. Das Fahrerassistenzsystem umfasst einen Stauassistenten zum Führen des Fahrzeugs während eines Staus. Ferner ist eine Bereitstellungseinrichtung zum Bereitstellen einer mit einem Umfeld des Fahrzeugs verknüpfte Information vorgesehen. Das Fahrerassistenzsystem umfasst des Weiteren eine Steuereinrichtung zum Steuern der Bereitstellungseinrichtung abhängig von einem Betriebszustand des Stauassistenten, wobei die Steuereinrichtung insbesondere ausgebildet ist, den Betriebszustand des Stauassistenten zu erfassen.

Gemäß einem anderen Aspekt wird ein Computerprogramm bereitgestellt, das Programmcode zur Durchführung des Verfahrens zum Betreiben eines Fahrerassistenzsystems für ein Fahrzeug umfasst, wenn das Computerprogramm in einem Computer ausgeführt wird.

Dadurch, dass das Bereitstellen der Informationen in Abhängigkeit von dem erfassten Betriebszustand des Stauassistenten durchgeführt wird, wird in vorteilhafter Weise bewirkt, dass die Information nur dann bereitgestellt wird, wenn sich der Stauassistent in einem bestimmten Betriebszustand befindet. Somit können in vorteilhafter Weise Situationen vermieden werden, in denen eine Bereitstellung der Information nicht sinnvoll ist und einen Fahrer nur unnötig von einer Fahrzeugführung ablenken würde.

Dadurch, dass die Information mit einem Umfeld des Fahrzeugs verknüpft ist, erhält der Fahrer in vorteilhafter Weise Informationen über das Umfeld des Fahrzeugs und kann diese insofern bei einer Fahrzeugführung berücksichtigen. Dadurch kann in vorteilhafter Weise eine Fahrzeugführung besonders sicher durchgeführt werden, so dass in vorteilhafter Weise ein Verkehrsfluss optimiert wird. Dies deshalb, da aufgrund der effizienten Fahrzeugführung seitens des Fahrers aufgrund der bereitgestellten Information betreffend dem Umfeld des Fahrzeugs der Fahrer sein eigenes Verhalten im Verkehrsfluss optimieren kann. So kann dieser beispielsweise aufgrund der bereitgestellten Information entscheiden, dass es sinnvoller ist, die Fahrstrecke zu verlassen, so dass nach dem Verlassen eine Anzahl an Fahrzeugen auf der Fahrstrecke verringert ist, was in vorteilhafter Weise ein Auflösen des Staus begünstigt bzw. beschleunigt.

Ein Stau im Sinne der vorliegenden Erfindung kann auch als ein Verkehrsstau bezeichnet werden und bezeichnet in der Regel einen stark stockenden oder zum Stillstand gekommenen Verkehrsfluss auf einer Fahrstrecke, beispielsweise einer Straße. Das heißt also insbesondere, dass eine Anzahl von Fahrzeugen pro Zeiteinheit oder pro Streckenlänge größer als ein vorbestimmter Schwellenwert ist. Insbesondere liegt ein Stau dann vor, wenn der Verkehr, also die Fahrzeuge, mit einer Geschwindigkeit von kleiner als 40 km/h, insbesondere kleiner als 20 km/h, vorzugsweise kleiner als 12 km/h, fließt. Der Begriff Verkehrsstau, wie er vorliegend verwendet wird, umfasst sowohl den zum Stillstand gekommenen Verkehrsfluss als auch den stark stockenden Verkehrsfluss.

Ein Stauassistent im Sinne der vorliegenden Erfindung bezeichnet insbesondere ein System, welches ausgebildet ist, das Fahrzeug teilautonom und/oder autonom, also vollautonom, zu führen, wenn ein Stau oder ein stockender Verkehrsfluss vorliegt. Vorzugsweise umfasst ein Stauassistent eine automatische Geschwindigkeitsregelung und/oder einen Spurführungsassistenten zum Führen des Fahrzeugs in einer Fahrspur und/oder eine automatische Lenkwinkelsteuerung. Das heißt also insbesondere, dass ein Stauassistent im Sinne der vorliegenden Erfindung ausgebildet ist, automatisch und zumindest teilautonom, vorzugsweise autonom, in eine Längs- und/oder Querführung des Fahrzeugs einzugreifen und diese zu regeln.

Gemäß einer Ausführungsform kann vorgesehen sein, dass die Information bereitgestellt wird, wenn der Betriebszustand ein aktiver Betriebszustand ist, in welchem der Stauassistent das Fahrzeug zumindest teilautonom, vorzugsweise autonom, führt. Das heißt also insbesondere, dass die Steuerungseinrichtung entsprechend ausgebildet ist, so dass die Bereitstellungseinrichtung die Information nur dann bereitstellt, wenn der Betriebszustand ein aktiver Betriebszustand ist, in welchem der Stauassistent das Fahrzeug zumindest teilautonom, vorzugsweise autonom, führt.

Das heißt also insbesondere, dass gemäß der vorgenannten Ausführungsform die Information nur dann bereitgestellt wird, wenn ein Stau oder ein stockender Verkehrsfluss vorliegt, in welchem der Stauassistent das Fahrzeug führt, da ansonsten der Stauassistent nicht in einem aktiven Betriebszustand wäre. In einer solchen Situation kann ein Fahrer ohne allzu große Abstriche bezüglich einer Fahrzeugsicherheit die bereitgestellte Information aufnehmen und verarbeiten.

In der Regel ist er zwar durch diese Tätigkeit für einen kurzen Moment von dem Verkehr abgelenkt. Allerdings wird dies in der Regel dadurch kompensiert, dass der Stauassistent das Fahrzeug zumindest teilautonom, vorzugsweise autonom, führt.

In einer Ausführungsform kann vorgesehen sein, dass die Information eine Information ausgewählt aus der vorgegebenen Gruppe von Informationen ist: geografische Information, historische Information, kulturelle Information, soziale Information, politische Information, kommerzielle Information.

Das heißt also insbesondere, dass der Fahrer in vorteilhafter Weise weitreichende Informationen über das Umfeld des Fahrzeugs erhält. Er kann insofern sein Fahrverhalten noch weiter optimieren.

In einer anderen Ausführungsform kann vorgesehen sein, dass mehrere Informationen bereitgestellt werden. Die Informationen können vorzugsweise gleich oder insbesondere unterschiedlich gebildet sein. Erfindungsgemäss ist vorgegehen, dass die Information ferner abhängig von einem Parameter ausgewählt aus der folgenden Gruppe von Parametern bereitgestellt wird: zeitliche Dauer des Staus, Staulänge, zeitliche Verweildauer im Stau, Entfernung und/oder Fahrzeit zu einer Ausfahrt, Entfernung und/oder Fahrzeit zu einem Parkplatz, Zielposition eines aktuellen Streckenverlaufs des Fahrzeugs, Zielposition eines zeitlich älteren Streckenverlaufs des Fahrzeugs, voraussichtliche Reichweite des Fahrzeugs, Wetterparameter.

Vorzugsweise kann vorgesehen sein, dass die Information abhängig von mehreren der vorgenannten Parameter bereitgestellt wird. Die Parameter können hier gleich oder unterschiedlich gebildet sein.

Durch das Vorsehen des Parameters, welcher eine notwendige Bedingung dafür ist, dass die Information bereitgestellt wird, können Situationen vermieden werden, in denen es nicht sinnvoll ist, die Information bereitzustellen. So ist es in der Regel nicht sinnvoll, die Information bereitzustellen, wenn eine zeitliche Dauer des Staus nur zwei Minuten beträgt. In diesem Fall würde der Fahrer unnötigerweise von dem Verkehr abgelenkt werden. Aufgrund der kurzen zeitlichen Dauer ist es in der Regel auch nicht sinnvoll, Maßnahmen zur Optimierung eines Verhaltens im Stau zu treffen. Andererseits kann es sinnvoll sein, dem Fahrer die Informationen dann bereitzustellen, wenn eine Entfernung und/oder eine Fahrzeit zu einer Ausfahrt unter einem vorbestimmten Schwellenwert liegen. In einem solchen Fall lohnt sich ein Verlassen der ursprünglichen Fahrstrecke, um beispielsweise den Stau zu umfahren.

Gemäß einer weiteren Ausführungsform kann vorgesehen sein, dass eine Identität eines Fahrzeuginsassen des Fahrzeugs erfasst wird und die Information aus einer Menge von Informationen in Abhängigkeit von personenbezogenen Daten des identifizierten Fahrzeuginsassens des Fahrzeugs ausgewählt wird. Dadurch ist es in vorteilhafter Weise ermöglicht, dass zugeschnitten auf den identifizierten Fahrzeuginsassen eine konkrete Information aus einer Menge von Informationen bereitgestellt wird. Die personenbezogenen Daten können beispielsweise von einem persönlichen Nutzerprofil des Fahrzeuginsassens in einem sozialen Netzwerk umfasst sein. Das heißt also insbesondere, dass die bereitgestellte Information abhängig von persönlichen Vorlieben des Fahrzeuginsassen bereitgestellt wird. Einem Fahrzeuginsasse, welcher beispielsweise ein Fußballfan ist, wird üblicherweise eine Information über ein nahegelegenes Fußballstadium relativ zu der momentanen Fahrzeugposition bereitgestellt, wenn das Fahrzeug sich in einem Stau befindet. So kann der Fahrzeuginsasse entscheiden, ob er, anstatt im Stau zu warten, lieber das Fußballstadium besucht. Er kann so sinnvoll die Zeit nutzen.

Gemäß einer weiteren Ausführungsform kann vorgesehen sein, dass die Information von einem Cloud-Server abgefragt wird. Ein Cloud-Server bezeichnet insbesondere einen extern vor dem Fahrzeug angeordneten Server, wobei eine Kommunikation zwischen dem Fahrzeug und dem Cloud-Server üblicherweise mittels eines drahtlosen Kommunikationsverfahrens durchgeführt wird. Hierbei kann es sich beispielsweise um ein Mobilfunk-Kommunikationsverfahren oder ein WLAN-Kommunikationsverfahren handeln. Die Kommunikation kann beispielsweise verschlüsselt werden. Dadurch, dass die Information von einem Cloud-Server abgefragt wird, muss keine lokale in dem Fahrzeug angeordnete Datenbank umfassend eine Vielzahl an Informationen bereitgestellt werden. Informationen auf einem Cloud-Server sind in der Regel aktueller als lokal abgespeicherte Informationen.

Gemäß einer Ausführungsform kann die Bereitstellungseinrichtung einen Bildschirm umfassen. Vorzugsweise kann die Bereitstellungseinrichtung eine Projektionseinrichtung zum Projizieren der bereitgestellten Information auf eine Scheibe, vorzugsweise eine Frontscheibe, des Fahrzeugs umfassen. Vorzugsweise kann die Bereitstellungseinrichtung einen Bildschirm eines Mobiltelefons umfassen.

Die Erfindung wird im Folgenden anhand von bevorzugten Ausführungsbeispielen näher erläutert. Hierbei zeigen:
Figur 1 ein Ablaufdiagramm eines Verfahrens zum Betreiben eines Fahrerassistenzsystems für ein Fahrzeug; und
Figur 2 ein Fahrerassistenzsystem für ein Fahrzeug.

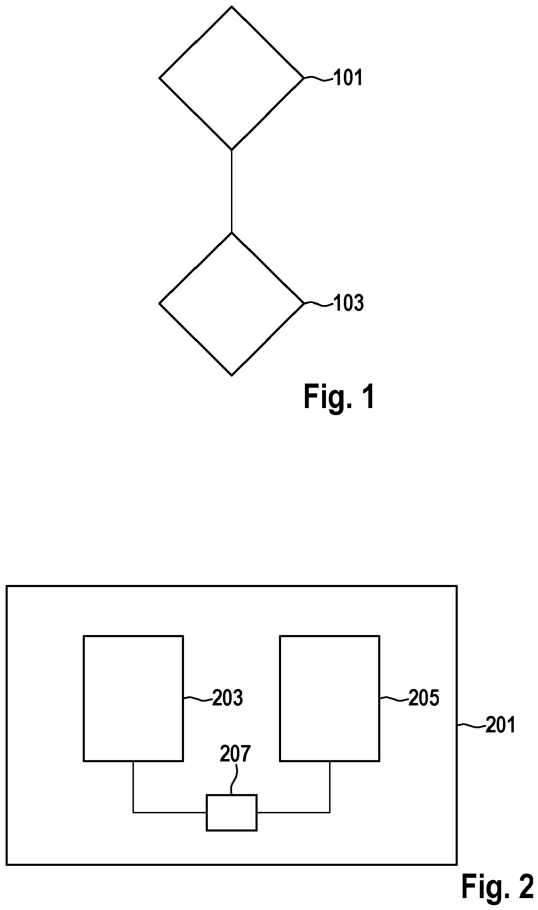

Figur 1 zeigt ein Verfahren zum Betreiben eines Fahrerassistenzsystems für ein Fahrzeug.

Das Fahrerassistenzsystem umfasst einen Stauassistent zum Führen des Fahrzeugs während eines Staus. Gemäß einem Schritt 101 wird ein Betriebszustand des Stauassistenten erfasst. Gemäß dem erfassten Betriebszustand des Stauassistenten wird gemäß einem Schritt 103 eine Information bereitgestellt, die mit einem Umfeld des Fahrzeugs verknüpft ist.

Gemäß einer nicht gezeigten Ausführungsform kann vorgesehen sein, dass eine Identität eines Fahrzeuginsassens des Fahrzeugs erfasst wird. Dieses Erfassen kann beispielsweise mittels einer Gesichtserkennung durchgeführt werden. Die Information wird vorzugsweise aus einer Menge von Information in Abhängigkeit von personenbezogenen Daten des identifizierten Fahrzeuginsassens des Fahrzeugs ausgewählt.

Figur 2 zeigt ein Fahrerassistenzsystem 201 für ein Fahrzeug (nicht gezeigt). Das Fahrerassistenzsystem 201 umfasst einen Stauassistenten 203 zum Führen des Fahrzeugs während eines Staus. Ferner ist eine Bereitstellungseinrichtung 205 vorgesehen, welche eine Information, die mit einem Umfeld des Fahrzeugs verknüpft ist, bereitstellen kann. Des Weiteren umfasst das Fahrerassistenzsystem 201 eine Steuereinrichtung 207 zum Steuern der Bereitstellungseinrichtung 205 abhängig von einem Betriebszustand des Stauassistenten 203. Hierbei kann vorgesehen sein, dass die Steuereinrichtung 207 ausgebildet ist, den Betriebszustand des Stauassistenten 203 zu erfassen. Insbesondere kann hierfür auch eine Erfassungseinrichtung vorgesehen sein, die mit der Steuereinrichtung 207 verbunden ist.

Vorzugsweise ist die Steuereinrichtung 207 ausgebildet, die Bereitstellungseinrichtung 205 derart zu steuern, dass diese nur dann die Information bereitstellt, wenn der Betriebszustand des Stauassistent 203 ein aktiver Betriebszustand ist, in welchem der Stauassistent 203 das Fahrzeug zumindest teilautonom, vorzugsweise autonom, das heißt also vollautonom, führt.

In einer nicht gezeigten Ausführungsform kann vorgesehen sein, dass der Stauassistent 203 einen oder mehrere Radarsensoren und/oder ein oder mehrere Videokameras umfasst. Mittels der entsprechenden Daten der Sensoren bzw. der Kameras können somit in vorteilhafter Weise der Stauassistent 203 Informationen betreffend Abstände zwischen Fahrzeugen, Informationen betreffend der Fahrspuren und Informationen betreffend der erkannten Fahrzeuge ermittelt werden, woraus beispielsweise eine Staudichte ermittelt werden kann.

Vorzugsweise kann der Stauassistent 203 mit einem Cloud-Server kommunizieren, um von diesem Informationen betreffend eines Verkehrszustands, insbesondere ob ein Stau vorliegt oder nicht, zu erhalten. Hier kann beispielsweise vorgesehen sein, dass ein soziales Netzwerk vorgesehen ist, wobei die einzelnen Teilnehmer des sozialen Netzwerks Informationen betreffend den Verkehr, beispielsweise eine Fahrzeit im Stau, untereinander austauschen.

Ferner kann vorzugsweise vorgesehen sein, dass das aktuelle Fahrziel und/oder frühere Fahrziele sowie der momentane Standort bzw. die Position ein persönliches Profil des Fahrers, wie beispielsweise kulturelle Vorlieben, Produktinformationen, Reiseziele, Angebote und/oder Sportinteressen erfasst werden.

Vorzugsweise kann vorgesehen sein, dass die einzelnen vorgenannten Informationen bzw. sensorisch erfassten Daten miteinander kombiniert werden, so dass standortbezogene und/oder bedarfsbezogene Hinweise aus den Datenbanken und sozialen Netzwerken des Internets zu Geografie, Geschichte, Kultur, Sozialem, Politik und/oder Kommerz von einem oder mehreren zentralen Cloud-Servern angefordert bzw. angefragt, ausgewertet und aufbereitet werden. Die aufbereiteten Informationen können mit persönlichen Wünschen und einem Verhalten eines Fahrers oder eines Fahrzeuginsassens abgestimmt werden. Solche persönlichen Wünsche und Verhaltensweisen sind in der Regel aus sozialen Netzwerken oder seinem Surfverhalten im Internet bekannt.

Die daraus personalisierte Information wird bereitgestellt. Insbesondere erfolgt diese Bereitstellung mittels eines Bildschirms, auf englisch auch Display genannt, wobei es sich hierbei um ein Navigationsdisplay oder ein Head-Up-Display im Fahrzeug handeln kann. Vorzugsweise kann alternativ oder ergänzend vorgesehen sein, dass die bereitgestellte Information mittels eines Mobilfunktelefons des Fahrzeugführers und/oder eines Fahrzeuginsassen bereitgestellt wird. Das heißt also insbesondere, dass die bereitgestellte Information zur Anzeige auf das Mobilfunktelefon gesendet bzw. transferiert und dort dargestellt wird. Die bereitgestellten Informationen können insbesondere zu realen Orten, wie beispielsweise eine Stadt, ein Denkmal, ein Fluss oder ein Flur, verweisen, die dann insbesondere als ein mögliches Ziel einer Navigation vorgeschlagen werden können.

Hierbei kann vorzugsweise vorgesehen sein, dass bei diesen Vorschlägen eine ursprüngliche Zielsetzung des Fahrzeugs, also eine ursprüngliche Zielposition, berücksichtigt wird. Vorzugsweise kann vorgesehen sein, dass hierbei eine zeitliche Dauer des Staus, mögliche Ausfahrten und/oder Parkplätze berücksichtigt werden. Insbesondere kann vorgesehen sein, dass die Information entsprechend abhängig bereitgestellt wird, also nur dann bereitgestellte wird, wenn ausreichend Parkplätze vorhanden sind oder eine Distanz zu einer nächsten Ausfahrt kleiner ist als eine vorbestimmte Distanz.

Dies dient in vorteilhafter Weise dazu, eine mögliche Alternative bereitzustellen, die Staufahrt bzw. die Zeit im Stau zu nutzen, um sich über das Umfeld des Fahrzeugs Informationen zu verschaffen. Insbesondere kann dies als eine Alternative dafür dienen, die Staufahrt abzubrechen und von der ursprünglichen Fahrstrecke abzufahren.

In einer nicht gezeigten Ausführungsform kann alternativ oder ergänzend vorgesehen sein, dass ein personalisiertes Profil eines Fahrers oder eines Fahrzeuginsassen verwendet wird, um bestimmte Produktinteressen, wie beispielsweise einen Kauf einer besonderen Vase, mit lokalen Angeboten und Werbeeinschaltungen lokaler Anbieter, die sich im Umfeld des Fahrzeugs befinden, abzugleichen. Beispielsweise kann ein solcher lokaler Anbieter eine Glasbläserei mit einer speziellen Herstellung und dadurch einer guten Qualität der Vasen sein, wenn gemäß dem Profil des Fahrers oder des Fahrzeuginsassens dieser sich für Vasen interessiert.

In einer nicht gezeigten Ausführungsform kann vorgesehen sein, dass die durchgeführten Analysen und daher insofern die bereitgestellte Information auch in einem persönlichen Profil des Fahrzeugführers oder des Fahrzeuginsassen in der Cloud bzw. auf einem Cloud-Server abgespeichert werden, so dass in vorteilhafter Weise die Informationen für spätere Planungen oder Recherchen, wie beispielsweise am Heim-Computer (PC) bei der Planung des nächsten Urlaubs oder Einkaufs, berücksichtigt werden können.

## Patentansprüche

1. Verfahren zum Betreiben eines Fahrerassistenzsystems (201) für ein Fahrzeug, wobei das Fahrerassistenzsystem (201) einen Stauassistenten (203) zum Führen des Fahrzeugs während eines Staus umfasst und ein Betriebszustand des Stauassistenten (203) erfasst (101) wird, wobei abhängig von dem erfassten Betriebszustand des Stauassistenten (203) eine mit einem Umfeld des Fahrzeugs verknüpfte Information bereitgestellt (103) wird, **dadurch gekennzeichnet, dass** die Information ferner abhängig von einem Parameter ausgewählt aus der folgenden Gruppe von Parametern bereitgestellt wird: zeitliche Dauer des Staus, Staulänge, zeitliche Verweildauer im Stau, Entfernung und/oder Fahrzeit zu einer Ausfahrt, Entfernung und/oder Fahrzeit zu einem Parkplatz, Zielposition eines aktuellen Streckenverlaufs des Fahrzeugs, Zielposition eines zeitlich älteren Streckenverlaufs des Fahrzeugs, voraussichtliche Reichweite des Fahrzeugs, Wetterparameter.

2. Verfahren nach Anspruch 1, wobei die Information bereitgestellt wird, wenn der Betriebszustand ein aktiver Betriebszustand ist, in welchem der Stauassistent (203) das Fahrzeug zumindest teilautonom führt.

3. Verfahren nach Anspruch 1 oder 2, wobei die Information eine Information ausgewählt aus der folgenden Gruppe von Informationen ist: geografische Information, historische Information, kulturelle Information, soziale Information, politische Information, kommerzielle Information.

4. Verfahren nach einem der vorherigen Ansprüche, wobei eine Identität eines Fahrzeuginsassen des Fahrzeugs erfasst wird und die Information aus einer Menge von Informationen in Abhängigkeit von personenbezogenen Daten des identifizierten Fahrzeuginsassens des Fahrzeugs ausgewählt wird.

5. Verfahren nach einem der vorherigen Ansprüche, wobei die Information von einem Cloudserver abgefragt wird.

6. Fahrerassistenzsystem (201) für ein Fahrzeug, umfassend einen Stauassistenten (203) zum Führen des Fahrzeugs während eines Staus, eine Bereitstellungseinrichtung (205) zum Bereitstellen einer mit einem Umfeld des Fahrzeugs verknüpften Information, wobei eine Steuerungseinrichtung (207) zum Steuern der Bereitstellungseinrichtung (205) abhängig von einem Betriebszustand des Stauassistenten (203) gebildet ist, **gekennzeichnet durch** Mittel zur Ausführung des Verfahrens nach Anspruch 1.

7. Computerprogramm, umfassend Programmcode zur Durchführung des Verfahrens nach einem der Ansprüche 1 bis 5, wenn das Computerprogramm in einem Computer ausgeführt wird.

## Claims

1. Method for operating a driver assistance system (201) for a vehicle, wherein the driver assistance system (201) comprises a congestion assistant (203) for guiding the vehicle during a queue and an operating state of the congestion assistant (203) is detected (101), wherein a piece of information linked to an environment of the vehicle is provided (103) depending on the detected operating state of the congestion assistant (203), **characterized in that** the information is further provided depending on a parameter selected from the following group of parameters: length of time of the queue, queue length, length of time spent in the queue, distance and/or driving time to an exit, distance and/or driving time to a car park, destination position on a current route of the vehicle, destination position on an earlier route of the vehicle, probable range of the vehicle, weather parameters.

2. Method according to Claim 1, wherein the information is provided if the operating state is an active operating state in which the congestion assistant (203) guides the vehicle at least semi-autonomously.

3. Method according to Claim 1 or 2, wherein the information is a piece of information selected from the following group of information: geographical information, historical information, cultural information, social information, political information, commercial information.

4. Method according to one of the preceding claims, wherein an identity of a vehicle occupant of the vehicle is detected and the information is selected from a set of information on the basis of personal data of the identified vehicle occupant of the vehicle.

5. Method according to one of the preceding claims, wherein the information is retrieved from a cloud server.

6. Driver assistance system (201) of a vehicle, comprising a congestion assistant (203) for guiding the vehicle during a queue, a provision device (205) for providing a piece of information linked to an environment of the vehicle, wherein a control device (207) is designed to control the provision device (205) depending on an operating state of the congestion assistant (203), **characterized by** means for carrying out the method according to Claim 1.

7. Computer program comprising program code for performing the method according to one of Claims 1 to 5 when the computer program is executed in a computer.

## Revendications

1. Procédé pour faire fonctionner un système d'assistance au conducteur (201) pour un véhicule, le système d'assistance au conducteur (201) comportant un assistant d'embouteillage (203) destiné à guider le véhicule pendant un embouteillage et un état de fonctionnement de l'assistant d'embouteillage (203) étant détecté (101), une information liée à l'environnement du véhicule étant délivrée (103) en fonction de l'état de fonctionnement détecté de l'assistant d'embouteillage (203), **caractérisé en ce que** l'information est en outre délivrée en fonction d'un paramètre sélectionné parmi le groupe de paramètres suivant : durée dans le temps de l'embouteillage, longueur de l'embouteillage, durée d'attente dans l'embouteillage, distance et/ou temps de trajet jusqu'à une sortie, distance et/ou temps de trajet jusqu'à une place de stationnement, position de la destination d'un tracé de parcours actuel du véhicule, position de la destination d'un tracé de parcours plus ancien du véhicule, autonomie probable du véhicule, paramètres météorologiques.

2. Procédé selon la revendication 1, l'information étant délivrée lorsque l'état de fonctionnement est un état de fonctionnement actif dans lequel l'assistant d'embouteillage (203) guide le véhicule de manière au moins partiellement autonome.

3. Procédé selon la revendication 1 ou 2, l'information étant une information sélectionnée parmi le groupe d'informations suivant : information géographique, information historique, information culturelle, information sociale, information politique, information commerciale.

4. Procédé selon l'une des revendications précédentes, une identité d'un occupant du véhicule étant acquise et l'information étant sélectionnée à partir d'une quantité d'informations en fonction de données personnelles de l'occupant identifié du véhicule.

5. Procédé selon l'une des revendications précédentes, l'information étant interrogée auprès d'un serveur infonuagique.

6. Système d'assistance au conducteur (201) pour un véhicule, comportant un assistant d'embouteillage (203) destiné à guider le véhicule pendant un embouteillage, un dispositif de délivrance (205) destiné à délivrer une information liée à l'environnement du véhicule, un dispositif de commande (207) destiné à commander le dispositif dé délivrance (205) étant formé en fonction d'un état de fonctionnement de l'assistant d'embouteillage (203), **caractérisé par** des moyens destinés à mettre en oeuvre le procédé selon la revendication 1.

7. Programme informatique, comprenant un code de programme destiné à mettre en oeuvre le procédé selon l'une des revendications 1 à 5 lorsque le programme informatique est exécuté dans un ordinateur.
